Europäisches Patentamt

European Patent Office

Office européen des brevets

(11) Veröffentlichungsnummer: **0 327 723 B1**

## EUROPÄISCHE PATENTSCHRIFT

(45) Veröffentlichungstag der Patentschrift: **14.10.92**

(21) Anmeldenummer: **88121567.7**

(22) Anmeldetag: **23.12.88**

(51) Int. Cl.$^5$: **C04B 35/46**, C04B 38/00, B01J 37/00, B01J 21/06

(54) **Presslinge auf Basis von pyrogen hergestelltem Titandioxid, Verfahren zu ihrer Herstellung und ihre Verwendung.**

(30) Priorität: **09.02.88 DE 3803894**

(43) Veröffentlichungstag der Anmeldung:
**16.08.89 Patentblatt 89/33**

(45) Bekanntmachung des Hinweises auf die
Patenterteilung:
**14.10.92 Patentblatt 92/42**

(84) Benannte Vertragsstaaten:
**AT BE CH DE ES FR GB GR IT LI LU NL SE**

(56) Entgegenhaltungen:
**EP-A- 0 038 741**
**EP-A- 0 152 599**
**FR-A- 2 301 299**
**US-A- 3 033 801**

(73) Patentinhaber: **Degussa Aktiengesellschaft**
**Weissfrauenstrasse 9**
**W-6000 Frankturt am Main 1(DE)**

(72) Erfinder: **Deller, Klaus, Dr.**
**Friedhofstrasse 47**
**W-6452 Hainburg(DE)**
Erfinder: **Klingel, Reinhard, Dr.**
**Taunustrasse 6**
**W-8755 Alzenau(DE)**
Erfinder: **Krause, Helmfried**
**Odenwaldstrasse 39**
**W-6458 Rodenbach(DE)**

EP 0 327 723 B1

**Beschreibung**

Die Erfindung betrifft Preßlinge auf Basis von pyrogen hergestelltem Titandioxid, das Verfahren zur Herstellung der Preßlinge aus pyrogen hergestelltem Titandioxid sowie deren Verwendung als Katalysatorträger oder Katalysator.

Pyrogen hergestelltes Titandioxid wird durch Hochtemperaturhydrolyse einer verdampfbaren Titanverbindung, in der Regel Titantetrachlorid, in einer Knallgasflamme hergestellt. Dieses Verfahren wird in der DE-PS 870 242 (1953) beschrieben. Die entstehenden Produkte haben überwiegend Anatasstruktur. Sie sind hydrophil, sehr rein und äußerst feinteilig. Die Primärteilchen (DIN 53206) zeigen in elektronenmikroskopischen Aufnahmen Kugelform und Durchmesser von 10 - 100 nm. Ein im Handel befindliches Produkt hat eine mittlere Primärteilchengröße von 30 nm. Definierte Agglomerate (nach DIN 53206) existieren nicht. Die Oberfläche der Teilchen ist glatt und porenfrei. Es besteht nur eine äußere, leicht zugängliche Oberfläche. Die spezifische Oberfläche nach BET kann - je nach Produktionsbedingungen - zwischen 20 und 100 m$^2$ / g liegen. Das erwähnte Handelsprodukt weist eine spezifische Oberfläche von 50 ± 15 m$^2$ / g auf.

Aufgrund der hohen Reinheit, der hohen spezifischen Oberfläche und des Fehlens von Poren wird pyrogen hergestelltes Titandioxid als Titandioxid-Komponente oder als Trägermaterial in Katalysatorsystemen eingesetzt (V. Rives-Arnau, G. Munuera, Appl. Surface Sci. 6 (1980) 122; N.K. Nag, T. Fransen, P. Mars, J. Cat. 68, 77 (1981); F. Solymosi, A. Erdöhelyi, M. Kocsis, J. Chem. Soc. Faraday Trans 1, 77, 1003 (1981); D.G. Mustard, C.H. Bartholomew, J. Cat. 67, 186 (1981); M.A. Vannice, R.L. Garten, J. Cat. 63, 255 (1980), M.A. Vannice, R.L. Garten, J. Cat. 66, 242 (1980).

In den aufgeführten Literaturzitaten werden jedoch nur pulverförmige Katalysatorsysteme behandelt. Soll pyrogen hergestelltes Titandioxid im technischen Maßstab in Katalysatorsystemen verwendet werden, ist es zweckmäßig, das pulverförmige Produkt in Formkörper unter weitgehender Erhaltung der spezifischen Oberfläche und deren leichter Zugänglichkeit zu überführen.

Da pyrogen hergestelltes Titandioxid besonders feinteilig ist, bereitet die Verformung zu Katalysatorträgern Schwierigkeiten.

Aus der DE-OS 31 32 674 ist ein Verfahren zur Herstellung von Preßlingen aus pyrogen hergestelltem Titandioxid bekannt, bei dem Kieselsol als Bindemittel verwendet wird. Als Preßhilfsmittel wird Äthandiol, Glycerin, Erythrite, Pentite oder Hexite eingesetzt. Dieses Verfahren hat den Nachteil, daß bei der großtechnischen Herstellung der Preßlinge ein unerwünschtes "Deckeln" bei den Preßlingen auftritt, d. h., eine obere Schicht löst sich wieder von den Preßlingen.

Zusätzlich enthalten die Formkörper neben TiO$_2$ auch beträchtliche Mengen an SiO$_2$, das aus dem Bindemittel herrührt und die katalytische Wirksamkeit beeinflußt.

Aus der DE-OS 32 17 751 ist die Verpressung von pyrogen hergestelltem Titandioxid bekannt, bei welchem organische Säuren oder sauer reagierende Salze als intermediäre Bindemittel verwendet werden. Zusätzlich wird Graphit als Preßhilfsmittel eingesetzt.

Dieses Verfahren hat den Nachteil, daß zur Entfernung des Graphits eine hohe Tempertemperatur von über 700 °C notwendig ist.

Das Dokument EP-A 0 038 741 beschreibt die Herstellung von Preßlingen aus Titandioxid, welches aus Ilmenit mittels dem Sulfatprozeß hergestellt wurde.

Dabei wird der zu verpressenden Mischung neben dem Titandioxid und Wasser Glucose oder Polyethylenglykol zugefügt.

Dabei besteht die Gefahr, daß bei dem Titandioxid eine Phasenveränderung eintritt. Das an sich erwünschte Anatas wird in die unerwünschte Rutilform umgewandelt.

Gegenstand der Erfindung sind Preßlinge auf Basis von pyrogen hergestelltem Titandioxid mit den folgenden physikalisch-chemischen Kenndaten:

| | |
|---|---|
| Außendurchmesser | 2 bis 15 mm |
| BET-Oberfläche nach DIN 66 131 | 35 bis 65 m$^2$ / g |
| Porenvolumen | 0,3 bis 0,8 cm$^3$ / g |
| Porenverteilung | keine Poren < 10 nm Durchmesser, mindestens 80 % der Poren im Bereich von 10 bis 70 nm Durchmesser |
| Bruchfestigkeit | 40 bis 300 N |
| Zusammensetzung | mindestens 94 Gew.-% TiO$_2$, (> 50 Gew.-% Anatas), Rest SiO$_2$ und Al$_2$O$_3$ |

Ein weiterer Gegenstand der Erfindung ist ein Verfahren zur Herstellung der Preßlinge auf Basis von pyrogen hergestelltem Titandioxid mit den folgenden physikalisch-chemischen Kenndaten:

| Außendurchmesser | 2 bis 15 mm |
|---|---|
| BET-Oberfläche nach DIN 66 131 | 35 bis 65 $m^2$ / g |
| Porenvolumen | 0,3 bis 0,8 $cm^3$ / g |
| Porenverteilung | keine Poren < 10 nm Durchmesser, mindestens 80 % der Poren im Bereich von 10 bis 70 nm Durchmesser |
| Bruchfestigkeit | 40 bis 300 N |
| Zusammensetzung | mindestens 94 Gew.-% $TiO_2$, (> 50 Gew.-% Anatas), Rest $SiO_2$ und $Al_2O_3$ |

welches dadurch gekennzeichnet ist, daß man pyrogen hergestelltes Titandioxid mit einem Porenbildner, wie z.B. Harnstoff, und mit Wasser gegebenenfalls zusätzlich mit einem Bindemittel, wie z. B. Kaolin, gegebenenfalls mit einem Tablettierhilfsmittel, wie z. B. Wachs, vermischt und kompaktiert, die erhaltenen Masse bei einer Temperatur vor 80 bis 120 °C trocknet und zu einem Pulver zerkleinert, das Pulver mittels einer bekannten Vorrichtung zu Preßlingen verpreßt und die erhaltenen Preßlinge bei einer Temperatur von 400 bis 600 °C während eines Zeitraumes von 0,5 bis 4,5 Stunden tempert.

Als Porenbildner können außer Harnstoff auch Zucker und/oder Stärke eingesetzt werden. Die Stoffe Harnstoff, Zucker und Stärke können in einer bevorzugten Form der Erfindung in wäßriger Lösung hinzugegeben werden.

In einer besonderen Ausführungsform der Erfindung kann die Mischung vor dem Verpressen die folgende Zusammensetzung aufweisen:

| 50 - 90 Gew.-% Titandioxid, | vorzugsweise 70 - 85 Gew.-%, |
|---|---|
| 5 - 50 Gew.-% Harnstoff, | vorzugsweise 15 - 30 Gew.-%, |
| 0,1 - 5 Gew.-% Kaolin, | vorzugsweise 1 - 4 Gew.-%, |
| 0,1 - 10 Gew.-% Wachs, | vorzugsweise 1 - 5 Gew.-%. |

Zur Durchführung des erfindungsgemäßen Verfahrens sind prinzipiell alle Mischer oder Mühlen geeignet, die eine gute Homogenisierung ermöglichen, wie z. B. Schaufel-, Wirbelschicht-, Kreisel- oder Luftstrommischer. Besonders geeignet sind Mischer, mit denen eine zusätzliche Verdichtung des Mischgutes möglich ist, z. B. Pflugscharmischer, Kollergänge oder Kugelmühlen. Nach dem Homogenisieren kann eine weitgehende Trocknung bei 80 - 120 °C erfolgen, so daß man nach dem Zerkleinern ein rieselfähiges Pulver erhält. Die Herstellung der Preßlinge kann auf Stempelpressen, Exzenterpressen, Strangpressen oder Rundlaufpressen als auch auf Kompaktoren erfolgen.

Durch Variation der Einsatzstoffmengen und des Preßdrucks kann die Bruchfestigkeit, die spez. Gesamtoberfläche und das Porenvolumen in einem gewissen Rahmen verändert werden.

Die erfindungsgemäßen Preßlinge können in den verschiedensten Formen, wie z. B. zylinderisch, kugelförmig, ringförmig mit einem Außendurchmesser von 2 bis 15 mm hergestellt werden.

Die erfindungsgemäßen Preßlinge können entweder direkt als Katalysatoren oder als Katalysatorträger, nachdem die Formkörper während oder nach ihrer Herstellung mit einer Lösung einer katalytisch wirksamen Substanz getränkt und ggf. durch eine geeignete Nachbehandlung aktiviert wurden, Verwendung finden.

Die erfindungsgemäßen Preßlinge weisen die folgenden Vorteile auf:
Sie weisen die Anatas-Modifikation auf. Sie haben eine hohe Festigkeit, ein hohes Porenvolumen. Der überwiegende Anteil der Poren liegt im Mesoporenbereich. Es sind keine Poren < 10 nm vorhanden.

Beispiele

Als Titandioxid wird in den Beispielen das pyrogen hergestellte Titandioxid P 25 verwendet, das mit den folgenden physikalisch-chemischen Kenndaten charakterisiert wird:

|  | TiO$_2$ P 25 |
|---|---|
| Oberfläche nach BET | m$^2$ / g 50 ± 15 |
| Mittlere Größe der Primärteilchen | nm 30 |
| Stampfdichte[1] normale Ware | g / l ca. 150 |
| Trocknungsverlust[2] (2 Stunden bei 105 °C) | % < 1,5 |
| Glühverlust[2][5] (2 Stunden bei 1000 °C) | % < 2 |
| pH-Wert[3] (in 4 %iger wäßriger Dipersion) | 3 - 4 |
| SiO$_2$[6] | % < 0,2 |
| Al$_2$O$_3$[6] | % < 0,3 |
| Fe$_2$O$_3$[6] | % < 0,01 |
| TiO$_2$[6] | % > 99,5 |
| HCl[6][8] | % < 0,3 |

1) nach DIN 53 194
2) nach DIN 55 921
3) nach DIN 53 200
5) bezogen auf die 2 Stunden bei 105 °C getrocknete Substanz
6) bezogen auf die 2 Stunden bei 1000 °C geglühte Substanz
8) HCl-Gehalt ist Bestandteil des Glühverlustes

Die BET-Oberfläche wird gemäß DIN 66 131 mit Stickstoff bestimmt.

Das Porenvolumen wird rechnerisch aus der Summe der Mikro-, Meso- und Markoporen bestimmt.

Die Bruchfestigkeit wird mittels des Bruchfestigkeitstesters der Fa. Erweka, Typ TBH 28, bestimmt.

Die Bestimmung der Mikro- und Mesoporen erfolgt durch Aufnahme einer N$_2$-Isotherme und deren Auswertung nach BET, de Boer und Barret, Joyner, Halenda.

Die Bestimmung der Makroporen erfolgt durch das Hg-Einpreßverfahren.

Beispiel 1 (Vergleichsbeispiel)

77 % Titandioxid P 25,

15 % Harnstoff,

 4 % Kaolin und

 4 % Graphit werden unter Zusatz von Wasser kompaktiert, bei 100 °C über 24 Stunden getrocknet und zu einem reiselfähigen Pulver zerkleinert.

Die Tablettierung erfolgt mittels einer Excenterpresse.

Die Rohtabletten werden bei 900 °C während 4 Stunden getempert. Die erhaltenen Preßlinge weisen die folgenden physikalisch-chemischen Kenndaten auf:

| Außendurchmesser | 4 mm |
|---|---|
| BET-Oberfläche nach DIN | 7 m$^2$ / g |
| Porenvolumen | 0,13 ml / g |
| Bruchfestigkeit | 570 N |
| Zusammensetzung: | 95 % TiO$_2$, 2,5 % SiO$_2$, 2,5 % Al$_2$O$_3$ |

Dieses Beispiel zeigt, daß aufgrund der hohen Tempertemperatur die Anatasphase in die Rutilphase übergegangen ist. Zusätzlich weisen diese Preßlinge zwar eine sehr hohe Bruchfestigkeit auf, jedoch ist die katalytische Aktivität durch die Verringerung der spezifischen Oberfläche und des Porenvolumens deutlich schlechter.

Beipiel 2

78 % Titandioxid P 25

2 % Kaolin und

20 % Harnstoff werden gemäß Beispiel 1 zu Tabletten verpreßt. Die Temperung erfolgt bei 500 °C. Die erhaltenen Preßlinge weisen die folgenden physikalisch-chemischen Kenndaten auf:

| Außendurchmesser | 9 mm |
|---|---|
| BET-Oberfläche nach DIN | 38 m$^2$ / g |
| Porenvolumen | 0,59 ml / g |
| Porenverteilung | keine Poren < 10 nm Durchmesser, 85 % der Poren im Bereich von 10 bis 70 nm Durchmesser |
| Bruchfestigkeit | 53 N |
| Zusammensetzung | 97,5 % TiO$_2$, 1,3 % SiO$_2$, 1,2 % Al$_2$O$_3$ |

Beispiel 3

80 % Titandioxid P 25 und

20 % Harnstoff werden gemäß Beispiel 1 miteinander vermischt, getrocknet und verpreßt.

Die Rohtabletten werden bei 450 °C während 4 Stunden getempert. Die erhaltenen Preßlinge weisen die folgenden physikalisch-chemischen Kenndaten auf:

| Außendurchmesser | 9 mm |
|---|---|
| BET-Oberfläche nach DIN | 51 m$^2$ / g |
| Porenvolumen | 0,43 ml / g |
| Porenverteilung | keine Poren < 10 nm Durchmesser, 83 % der Poren im Bereich von 10 bis 70 nm Durchmesser |
| Bruchfestigkeit | 68 N |
| Zusammensetzung | 100 % TiO$_2$ |

Beispiel 4

77,0 % Titandioxid P 25,

3,8 % Kaolin,

3,8 % Mikrowachs C und

15,4 % Harnstoff werden gemäß Beispiel 1 miteinander vermischt, getrocknet und verpreßt. Die Rohtabletten werden bei 600 °C während 4 Stunden getempert. Die erhaltenen Preßlinge weisen die folgenden physikalisch-chemischen Kenndaten auf:

| Außendurchmesser | 9 mm |
|---|---|
| BET-Oberfläche nach DIN | 43 m$^2$ / g |
| Porenvolumen | 0,30 ml / g |
| Porenverteilung | keine Poren < 10 nm Durchmesser, 86 % der Poren im Bereich von 10 bis 70 nm Durchmesser |
| Bruchfestigkeit | 244 N |
| Zusammensetzung | 95 Gew.-% TiO$_2$; 2,5 Gew.-% SiO$_2$; 2,5 Gew.-% Al$_2$O$_3$ |

**Patentansprüche**

1. Preßlinge auf Basis von pyrogen hergelltem Titandioxid mit den folgenden physikalisch-chemischen Kenndaten:

| Außendurchmesser | 2 bis 15 mm |
| BET-Oberfläche nach DIN 66 131 | 35 bis 65 $m^2$ / g |
| Porenvolumen | 0,3 bis 0,8 $cm^3$ / g |
| Porenverteilung | keine Poren < 10 nm Durchmesser, mindestens 80 % der Poren im Bereich von 10 bis 70 nm |
| Bruchfestigkeit | 40 bis 300 N |
| Zusammensetzung | mindestens 94 Gew.-% $TiO_2$ (> 50 Gew.-% Anatas), Rest $SiO_2$ und $Al_2O_3$ |

2. Verfahren zur Herstellung der Preßlinge auf Basis von pyrogen hergstelltem Titandioxid mit den folgenden physikalisch-chemischen Kenndaten:

| Außendurchmesser | 2 bis 15 mm |
| BET-Oberfläche nach DIN 66 131 | 35 bis 65 $m^2$ / g |
| Porenvolumen | 0,3 bis 0,8 $cm^3$ / g |
| Porenverteilung | keine Poren < 10 nm Durchmesser, mindestens 80 % der Poren im Bereich von 10 bis 70 nm |
| Bruchfestigkeit | 40 bis 300 N |
| Zusammensetzung | mindestens 94 Gew.-% $TiO_2$ (> 50 Gew.-% Anatas), Rest $SiO_2$ und $Al_2O_3$ |

dadurch gekennzeichnet, daß man pyrogen hergestelltes Titandioxid mit einem Porenbildner und mit Wasser, gegebenenfalls zusätzlich mit einem Bindemittel, gegebenenfalls mit einem Tablettierhilfsmittel, vermischt und kompaktiert, die erhaltene Masse bei einer Temperatur von 80 bis 120 °C trocknet und zu einem Pulver zerkleinert, das Pulver mittels einer bekannten Vorrichtung zu Preßlingen verpreßt und die erhaltenen Preßlinge bei einer Temperatur von 400 bis 600 °C während eines Zeitraumes vom 0,5 bis 4,5 Stunden tempert.

3. Verwendung der Preßlinge gemäß Anspruch 1 als Katalysatorträger oder Katalysator.

## Claims

1. Compacts based on pyrogenically prepared titanium dioxide and having the following physical-chemical characteristic data:

| External diameter | 2 to 15 mm |
| BET surface area in accordance with DIN 66 131 | 35 to 65 $m^2$/g |
| Pore volume | 0.3 to 0.8 $cm^3$/g |
| Pore distribution | no pores <10 nm in diameter, at least 80% of the pores in the range 10 to 70 nm |
| Breaking strength | 40 to 300 N |
| Composition | at least 94% by weight of $TiO_2$ (>50% by weight, anatase), remainder $SiO_2$ and $Al_2O_3$ |

2. Process for the production of compacts based on pyrogenically prepared titanium dioxide and having the following physical-chemical characteristic data:

| External diameter | 2 to 15 mm |
|---|---|
| BET surface area in accordance with DIN 66 131 | 35 to 65 m$^2$/g |
| Pore volume | 0.3 to 0.8 cm$^3$/g |
| Pore distribution | no pores <10 nm in diameter, at least 80% of the pores in the range 10 to 70 nm |
| Breaking strength | 40 to 300 N |
| Composition | at least 94% by weight of TiO$_2$ (>50% by weight, anatase), remainder SiO$_2$ and Al$_2$O$_3$, |

characterized in that pyrogenically prepared titanium dioxide is mixed and compacted with a pore former, and with water, if appropriate additionally with a binder, if appropriate with a tabletting assistant, the composition obtained is dried at a temperature of from 80 to 120°C and comminuted to form a powder, the powder is pressed by means of a known apparatus to form compacts, and the compacts obtained are conditioned at a temperature of from 400 to 600°C for a period of from 0.5 to 4.5 hours.

3. Use of the compacts according to Claim 1 as a catalyst support or catalyst.

## Revendications

1. Pièces pressées à base de bioxyde de titane pyrogéné ayant les caractéristiques physico-chimiques suivantes :

| Diamètre extérieur | 2 à 15 mm |
|---|---|
| Surface BET selon DIN 66131 | 35 à 65 m$^2$/g |
| Volume de pores | 0,3 à 0,8 cm$^3$/g |
| Répartition des pores | pas de pores < 10 nm de diamètre, au moins 80 % des pores dans l'intervalle de diamètre de 10 à 70 nm |
| Résistance à la rupture | 40 à 300 N |
| Composition | au moins 94 % en poids de TiO$_2$ (> 50 % poids d'anatase) le complément étant SiO$_2$ et Al$_2$O$_3$. |

2. Procédé de préparation de pièces pressées à base de bioxyde de titane pyrogéné ayant les caractéristiques physico-chimiques suivantes :

| Diamètre extérieur | 2 à 15 mm |
|---|---|
| Surface BET selon DIN 66131 | 35 à 65 m$^2$/g |
| Volume de pores | 0,3 à 0,8 cm$^3$/g |
| Répartition des pores | pas de pores < 10 nm de diamètre, au moins 80 % des pores dans l'intervalle de diamètre de 10 à 70 nm |
| Résistance à la rupture | 40 à 300 N |
| Composition | au moins 94 % en poids de TiO$_2$ (> 50 % poids d'anatase) le complément étant SiO$_2$ et Al$_2$O$_3$ |

caractérisé en ce qu'on mélange du bioxyde de titane pyrogéné avec un formateur de pores, et avec de l'eau, le cas échéant, en outre, avec un liant, le cas échéant avec un dispositif pour comprimés et on compacte et on sèche la masse obtenue à une température comprise entre 80 et 120°C et on broie pour donner une poudre, on comprime la poudre au moyen d'un dispositif connu en pièces pressées et on traite les pièces pressées obtenues à une température comprise entre 400 et 600°C pendant un intervalle de temps de 0,5 à 4,5 heures.

3. Utilisation des pièces pressées selon la revendication 1 comme support de catalyseur ou catalyseur.